Europäisches Patentamt

European Patent Office

Office européen des brevets

(11) Veröffentlichungsnummer: **0 394 858 B1**

# EUROPÄISCHE PATENTSCHRIFT

(45) Veröffentlichungstag der Patentschrift: **22.12.93**

(51) Int. Cl.⁵: **B01D 61/44**, C02F 1/469

(21) Anmeldenummer: **90107501.0**

(22) Anmeldetag: **20.04.90**

(54) **Verfahren und Vorrichtung zur Entfernung von Nitraten aus einem Wasserstrom im Rahmen der Gebrauchswasser-Aufbereitung.**

(30) Priorität: **28.04.89 CH 1635/89**

(43) Veröffentlichungstag der Anmeldung:
**31.10.90 Patentblatt 90/44**

(45) Bekanntmachung des Hinweises auf die Patenterteilung:
**22.12.93 Patentblatt 93/51**

(84) Benannte Vertragsstaaten:
**AT BE CH DE DK ES FR GB IT LI NL SE**

(56) Entgegenhaltungen:
**EP-A- 0 315 510**

**CHEMIE INGENIEUR TECHNIK, Band 58, Nr. 12, Dezember 1986, VCH VerlagsgesmbH, Weinheim (DE); R. RAUTENBACH et al., Seiten 938-945&NUM;**

**INDUSTRIAL ENGINEERING CHEMISTRY, PROCESS DESIGN AND DEVELOPMENT, Band 13, Nr. 3, 1974; A.A. SONIN et al., Seiten 241-248&NUM;**

(73) Patentinhaber: **OTTO OEKO-TECH GMBH & CO. KG**
**Gustav-Heinemann-Ufer 54**
**D-50968 Köln(DE)**

(72) Erfinder: **Oldani, Markus, Dr.**
**Mittelstrasse 11**
**Ch-5430 Wettingen(CH)**
Erfinder: **Miquel, Alex**
**Nordstrasse 358**
**CH-8037 Zürich(CH)**
Erfinder: **Schock, Günter, Dr.**
**Anton-Meyer-Strasse 16**
**D-5161 Merzenich(DE)**

(74) Vertreter: **Rzehak, Herbert et al**
**Asea Brown Boveri AG**
**Abteilung TEI-Immaterialgüterrecht**
**Wiesenstrasse 26**
**CH-5401 Baden (CH)**

**Beschreibung**

TECHNISCHES GEBIET

Bei der Erfindung wird ausgegangen von einem Verfahren und einer Vorrichtung zum Entfernen von Nitraten aus einem Wasserstrom nach dem Oberbegriff der Patentansprüche 1 und 6.

STAND DER TECHNIK

Mit dem Oberbegriff nimmt die Erfindung auf einen Stand der Technik Bezug, wie er aus der deutschen Zeitschrift: Chemie Ingenieur Technik 58 (1986) Nr. 12, S. 938 - 945, bekannt ist. Dort werden Vor- und Nachteile von Umkehrosmose und Elektrodialyse gegenübergestellt. Bei der Elektrodialyse sind zwischen einer Anode aus platiniertem Stahl und einer Kathode aus V2A-Stahl mehrere ionenselektive Anionen- und nicht selektive Kationenaustauscher-Membranen in Reihe (Modulanordnung) angeordnet. Dadurch ist theoretisch eine selektive, aber für viele Fälle praktisch unzureichende Nitrat-/Chlorid-Entfernung möglich, während Sulfationen weitgehend im Diluat verbleiben. Man betreibt in der Praxis die Anlage bei etwa 80 % der Grenzstromdichte, die sich durch einen scharfen Abfall des pH-Wertes bemerkbar macht. Durch eine periodische Polumkehr im Abstand von etwa 4 h und gleichzeitige Umschaltung der Diluat- und Retentatkammern können etwaige Ablagerungen auf den Membranen rückgängig gemacht werden.

Es wurde nicht angegeben, dass sich Membranen mit einer Selektivität für Nitrat gegenüber Sulfat besonders eignen und dass die Selektivität mit abnehmender Stromdichte zunimmt.

Bei der Aufbereitung von Gebrauchswasser zur Trinkwasserversorgung muss der Gehalt an schädlichen Salzen soweit abgesenkt werden, dass der Restgehalt die von den Behörden geforderten Maximalwerte nicht überschreitet. In neuerer Zeit bereitet der steigende Nitratgehalt des für die Gebrauchs- und Trinkwasserbereitstellung zu verwendenden Wassers (Grundwasser, Quellwasser, Flusswasser etc.) Schwierigkeiten.

Die Erfindung bezieht sich auf die Weiterentwicklung und Verbesserung des Elektrodialyseprozesses zur Entfernung von schädlichen Salzen im Wasser. Die Entfernung von Nitraten bei einer möglichst hohen Wasserausbeute hat dabei den Vorrang.

Im engeren Sinne betrifft die Erfindung ein Verfahren sowie eine Vorrichtung zur Entfernung von Nitraten aus einem Wasserstrom im Rahmen der Gebrauchswasseraufbereitung, auf der Basis eines Elektrodialyseprozesses, wobei einerseits ein an Nitrationen angereichertes Konzentrat, welches aus dem Wasserstrom abgezweigt wird, andererseits ein verbleibendes, an Nitrationen verarmtes, als Gebrauchswasser zu verwendendes Diluat erzeugt wird.

Die Bedeutung der Senkung des Nitratgehaltes von Grund- und Trinkwasser nimmt im Rahmen der Gesundheits- und Umweltgesetzgebung stets zu. Es werden zur Zeit zur Wasseraufbereitung in dieser Hinsicht die folgenden Verfahren angegeben:
- Biologische Verfahren,
- Ionenaustauscherverfahren,
- Membranverfahren.

Die Membranverfahren können wieder unterteilt werden in:
- Umkehrosmose und
- Elektrodialyse.

Von diesen bekannten Verfahren zur Senkung des Nitratgehaltes weist keines eindeutig dominierende Vorteile auf. Sie lassen alle in technischer und wirtschaftlicher Hinsicht zu wünschen übrig. Biologische und Ionenaustauscherverfahren sowie die Umkehrosmose benötigen die Zugabe von Chemikalien, was umständlich, umweltschädlich und aufwendig ist. Ausserdem ist das biologische Verfahren sehr wartungsintensiv und kontrollbedürftig. Bei anderen Verfahren ist die Nitratabscheidung nicht spezifisch genug.

Es sind Verfahren und Vorrichtungen zur Durchführung einer Elektrodialyse, unter anderem zur Abtrennung von Nitraten aus Lösungen, bekannt. Ferner: Aufbereitung von nitrathaltigem Wasser mittels Umkehrosmose und Elektrodialyse. Die Methode der Elektrodialyse wässriger Lösungen mittels selektiver Membranen, wobei die Ionen mit kleinerer Ladung bevorzugt transportiert werden, ist ebenfalls bekannt. Es fehlen indessen oft Angaben über verwendete Membranen, Stromdichte etc.

Gewisse homogene dünne, asymmetrische oder zusammengesetzte Membranen haben die Eigenschaft, dass entweder auf der nicht beschichteten Seite im Konzentratraum sehr leicht eine Verblockung mit schwerlöslichen Salzen auftritt, welche selbst durch eine Polumkehr nicht zu beseitigen ist, oder aber, dass bei den homogenen dünnen Membranen der elektrische Widerstand zu hoch ist.

Zum Stand der Technik werden folgende Druckschriften genannt:

- H. Sontheimer und U. Rohmann, "Grundwasserbelastung mit Nitrat - Ursachen, Bedeutung, Lösungswege", gwf-wasser/abwasser, 125 (1984) 599-608,
- R. Rautenbach, W. Kopp, G. van Opbergen, Th. Peters und R. Hellekes, "Elektrodialyse zur Nitratentfernung aus Grundwässern", gwf-wasser/abwasser, 126 (1985) 349-355,
- R. Rautenbach, W. Kopp, R. Hellekes, R. Peters and G. van Opbergen, "Separation of Nitrate from Well Water by Membrane Processes (Reverse Osmosis/Electrodialysis Reversal)", Aqua, 5 (1986) 279-282,
- M. Perry et O. Kedem, "La purification de l'eau par electrodialyse du nitrate", Eau Ind., 55 (1981) 47-52,
- A. Eyal and O. Kedem, "Nitrate-selective Anion-Exchange Membranes", J. Membrane Sci., 38 (1988) 101-111,
- D. A. Cowan and J. H. Brown, "Effect of Turbulence on Limiting Current in Electrodialysis Cells", Ind. Eng. Chem., 51 (1959) 1445-1448,
- DE-A-30 41 209,
- DE-A-28 55 775,
- US-A-3 510 417,
- US-A-3 510 418.

In der US-A-3 510 417 und US-A-3 510 418 ist die Herstellung erfindungsgemäss einsetzbarer selektiver Anionen- und Kationenaustauscher-Membranen beschrieben.

Da die bekannten Verfahren zur Gebrauchswasseraufbereitung zu wünschen übrig lassen, besteht ein grosses Bedürfnis zu deren Weiterentwicklung und Vervollkommnung.

## DARSTELLUNG DER ERFINDUNG

Die Erfindung, wie sie in den Patentansprüchen 1 und 6 definiert ist, löst die Aufgabe, ein Verfahren und eine Vorrichtung zur Entfernung von Nitraten aus einem Wasserstrom im Rahmen der Gebrauchswasseraufbereitung anzugeben, bei denen keine Zugabe von Chemikalien und kein grosser Wartungsaufwand erforderlich und eine möglichst spezifische, selektive Nitratabscheidung in einer Form gewährleistet ist, welche keine zusätzlichen aufwendigen Apparaturen nötig macht. Das Verfahren soll auf verschiedenste Art und Zusammensetzung ohne spezielle spezifische Anpassung möglichst universell anwendbar sein.

Untersuchungen haben gezeigt, dass Membranen mit einer Selektivität $\alpha > 1$ für den Chlorid- gegenüber dem Sulfat-Transport auch eine Selektivität $\alpha > 2$ für den Nitrat-Transport gegenüber dem Bikarbonat-Transport aufweisen, wenn der angewandte Strom weniger als 50 % des Grenzstromes beträgt. Die Selektivität $\alpha$ ist dabei wie folgt definiert:

$$\alpha^{Cl^-}_{SO_4^{2-}} \;=\; \frac{dN_{Cl^-}}{dt \cdot N_{Cl^-}} \;\cdot\; \frac{dt \cdot N_{SO_4^{2-}}}{dN_{SO_4^{2-}}} \;\cdot$$

Dabei bedeute dN/dt die Geschwindigkeit, mit welcher ein bestimmtes Ion bei einer vorgegebenen konstanten Stromdichte aus der wässrigen Lösung entfernt wird und N die Konzentration dieser Ionen in wässriger Lösung. Die Selektivitäten verschiedener Anionenaustauscher-Membranen bei einer Stromdichte von 1,1 mA/cm², entsprechend 12 % der Grenzstromdichte, bezogen auf die einseitige Membranfläche, sind in der nachfolgenden Tabelle 1 dargestellt.

Tabelle 1:

| Membran | Typ | $\alpha^{Cl^-}_{SO_4^{2-}}$ | $\alpha^{NO_3^-}_{HCO_3^-}$ |
|---|---|---|---|
| 1 | AMV | 0,56 | 1,65 |
| 2 | ASV | 3,41 | 2,16 |
| 3 | A-102 | 37,5 | 2,78 |
| 4 | A-201 | 0,50 | 1,62 |
| 6 | MA3475 | 1,40 | 2,22 |
| 7 | AM-1 | 0,52 | 1,69 |
| 8 | ACS | 6,19 | 3,19 |
| 9 | AMX | 0,44 | 1,83 |

Die Membranen 1 und 2 stammen von dem Hersteller Asahi Glass, die Membranen 3 und 4 von Asahi Chemical Industries, die Membran 6 von IONAC und die Membranen 7 bis 9 von Tokuyama Soda.

Dieser Effekt war völlig überraschend, denn es ist keineswegs offensichtlich, dass eine Korrelation zwischen diesen beiden Selektivitäten bestehen muss, besonders deshalb nicht, weil es sich bei der Nitrat-Bikarbonat-Selektivität um eine Selektivität zwischen zwei einwertigen Ionen handelt.

Die Selektivität verschiedener Kationenaustauscher-Membranen bei einer Stromdichte von 1,6 mA/cm², entsprechend 15 % der Grenzstromdichte, bezogen auf die einseitige Membranfläche, sind in der nachfolgenden Tabelle 2 dargestellt.

Tabelle 2:

| Membran | Typ | $\alpha^{Na^+}_{Ca^{2+}}$ | $\alpha^{Na^+}_{Mg^+}$ |
|---|---|---|---|
| 1 | CMV | 0,23 | 0,36 |
| 2 | K-101 | 0,21 | 0,34 |
| 3 | CM-1 | 0,27 | 0,35 |
| 4 | CMX | 0,23 | 0,47 |
| 5 | CMS | 1,94 | 3,26 |
| 6 | K-172 | 1,65 | 3,27 |

Die Membran 1 stammt vom Hersteller Asahi Glass, die Membranen 2 und 6 sind vom Hersteller Asahi Chemical Industries und die Membranen 3 - 5 von Tokuyama Soda.

Bei einer derartigen Membranauswahl, Stromauswahl und Anordnung wird erreicht, dass die Nitrationen $NO_3^-$ zu einer bevorzugten Wanderung in Richtung Konzentrat gezwungen werden, dass eine sehr hohe Wasserausbeute erreicht wird, und dass die Tendenz zur Kesselsteinbildung in den Kammern mit zunehmender $NO_3$-Konzentration und in den vom Konzentrat-Ablauf bespülten Bauteilen noch weiter verringert wird.

Der Leitgedanke besteht darin, durch geeignete Prozessführung und Auswahl der für die Bauelemente, insbesondere die Membranen, zu verwendenden Werkstoffe grundsätzlich eine selektive Abtrennung der Nitrationen $NO_3^-$ zu bewerkstelligen.

## KURZE BESCHREIBUNG DER ZEICHNUNGEN

Die Erfindung wird nachstehend anhand von Ausführungsbeispielen erläutert. Es zeigen:

Fig. 1    den schematischen Aufbau einer Trennvorrichtung mittels Elektrodialyse mit den grundsätzlich ablaufenden Prozessen,

Fig. 2    einen Längsschnitt durch eine schematische Elektrodialyse-Vorrichtung,

Fig. 3    ein Fliessdiagramm des grundsätzlichen Verfahrens der Elektrodialyse.

## WEGE ZUR AUSFÜHRUNG DER ERFINDUNG

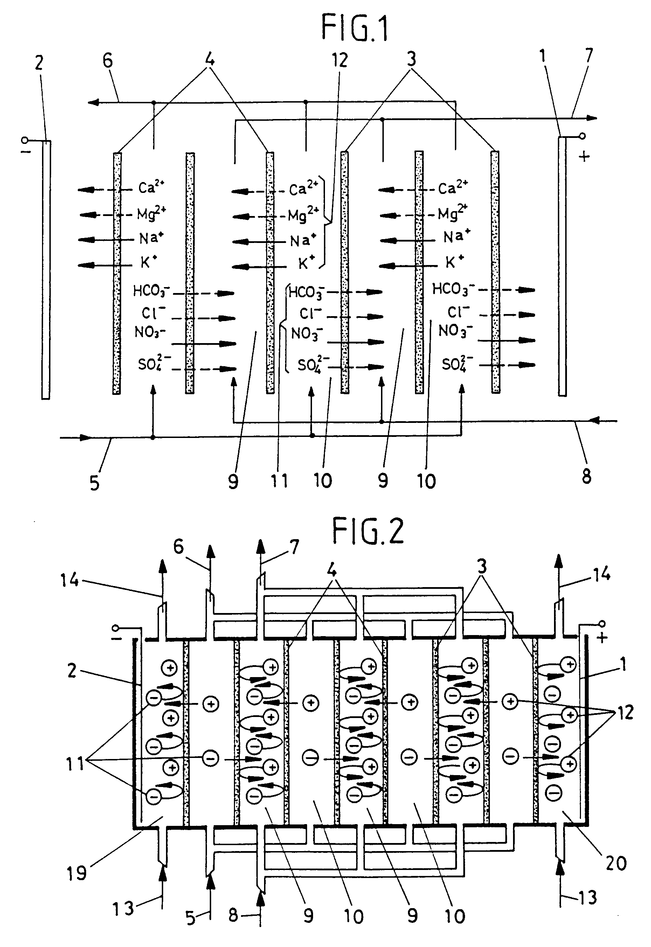

In Fig. 1 ist der schematische Aufbau einer Trennvorrichtung mittels Elektrodialyse mit den grundsätzlich ablaufenden Prozessen dargestellt. 1 ist die Anode, 2 die Kathode in einem nicht dargestellten Gefäss. 3 sind Anionenaustauscher-Membranen mit einer hohen Durchlässigkeit (Wanderungsgeschwindigkeit) für Nitrationen $NO_3^-$, was durch einen ausgezogenen Pfeil in Richtung Anode angedeutet ist. Dagegen ist die relative Durchlässigkeit für andere Anionen ($HCO_3^-$; $Cl^-$; $SO_4^{2-}$) gering, was durch gestrichelte Pfeile zum Ausdruck gebracht wird. 4 sind zwischen den Anionenaustauscher-Membranen angeordnete Kationenaustauscher-Membranen, ebenfalls mit einer relativen Durchlässigkeit für Natriumionen $Na^+$ und Kaliumionen $K^+$, die höher ist als für die übrigen Kationen ($Ca^{2+}$; $Mg^{2+}$), was durch einen ausgezogenen Pfeil in Richtung Kathode angedeutet ist. 5 ist der Rohwasserzulauf, 6 der Diluatablauf (Gebrauchswasser), 7 der Konzentratablauf (zu entfernender Teil des Wassers). Mit 8 ist die teilweise Konzentrat-Rückführung bezeichnet: Ein Teil des Konzentrats wird zwecks Erhöhung der Ausbeute wieder am Eingang der Elektrodialyse-Vorrichtung aufgegeben. Das Gefäss weist eine Vielzahl von durch die Ionenaustauscher-Membranen 3 und 4 unterteilte Kammern auf. 9 sind Kammern mit zunehmender, 10 Kammern mit abnehmender $NO_3^-$-Konzentration. 11 bezieht sich auf die durch die Anionenaustauscher-Membranen 3 hindurchtretenden Anionen ($HCO_3^-$; $Cl^-$; $NO_3^-$; $SO_4^{2-}$), 12 auf die durch die Kationen-Membranen 4 durchtretenden Kationen ($Ca^{2+}$; $Mg^{2+}$; $Na^+$; $K^+$).

Fig. 2 zeigt einen Längsschnitt durch eine schematische Elektrodialyse-Vorrichtung. In einem Gefäss befinden sich Elektroden und Membranen. Die Bezugszeichen 1 bis 4 entsprechen genau denjenigen der Fig. 1. 5 ist der Rohwasserzulauf zu den Kammern 10, 6 der Diluatablauf aus den Kammern 10 (verringerter $NO_3^-$-Gehalt), 7 der Konzentratablauf aus den Kammern 9 (erhöhter $NO_3^-$-Gehalt). 8 ist die teilweise Konzentratrückführung. 11 sind die Anionen (Symbol -), 12 die Kationen (Symbol +). Die Kammern, in denen sich die Elektroden befinden (Kathodenkammer 19; Anodenkammer 20), weisen einen gesonderten Wasserstrom auf. 13 ist der Elektrodenspülungzulauf, 14 der Elektrodenspülungablauf.

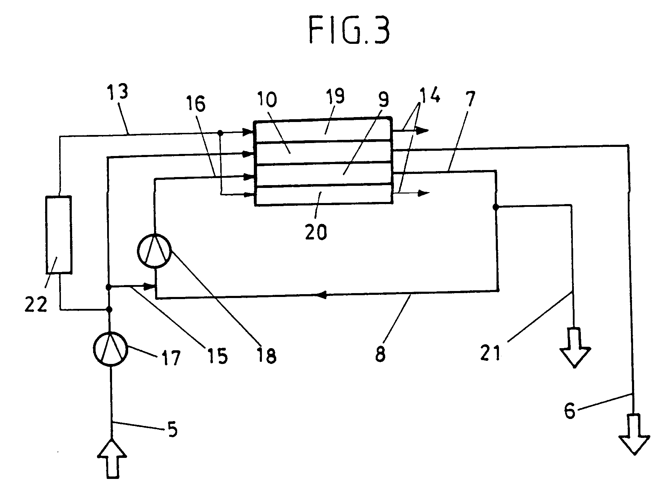

In Fig. 3 ist ein Fliessdiagramm des grundsätzlichen Verfahrens der Elektrodialyse dargestellt. Der Rohwasserzulauf 5 ist mit einer Rohwasser-Förderpumpe 17 versehen, die das Wasser in die Kammer 10 fördert. Aus dieser gelangt es als Gebrauchswasser in den Diluatablauf 6. Das Konzentrat wird aus der Kammer 9 abgezogen (Konzentratablauf 7) und als teilweise Konzentratrückführung 8 zusammen mit der Rohwasserabzweigung 15 zur Verdünnung des Konzentratrücklaufs der Konzentrat-Umlaufpumpe 18 zugeleitet. Dieses Wasser wird als Aufgabe 16 des verdünnten Konzentrats aus der Rückführung der Kammer 9 zugeleitet. Aus dem Konzentratstrom wird der Abwasserablauf 21 definitiv abgezweigt. Die Elektrodenkammern 19 und 20 werden über die Enthärtungseinrichtung 22 gesondert mit Wasser versorgt (Elektrodenspülungzulauf 13 und -ablauf 14). Das Wasser aus dem Elektrodenspülungablauf 14 wird entweder dem Rohwasserzulauf 5, der teilweisen Konzentratrückführung 8 oder dem Diluatablauf 6 zugeführt (nicht eingezeichnet).

Vergleichendes Beispiel A:

Um den Effekt des neuen erfindungsgemässen Verfahrens besser hervorzuheben, wurden zunächst Versuche nach dem Stand der Technik durchgeführt. Die Apparatur hatte grundsätzlich den Aufbau gemäss Fig. 2. Es handelte sich dabei um einen Apparat des Typs P50 der Firma Société de Recherche Technique et Industrielle (SRTI), Frankreich.

Die Vorrichtung zur Durchführung des Elektrodialyseprozesses bestand aus einem nach dem Prinzip der Filterpresse aufgebauten Block, welcher durch 2 senkrechte, mit 4 Bolzen zusammengehaltene Endplatten aus Stahl von 20 mm Dicke und 300 mm Breite, bei 480 mm Höhe begrenzt war. Der Block hatte im Grundriss eine Länge von 170 mm und eine Breite von 300 mm und in Strömungsrichtung (Aufriss) eine Höhe von 480 mm. In unmittelbarer Nähe der innenliegenden senkrechten Wände der Endplatten wurde je eine Anode 1 und eine Kathode 2 von 60 mm Breite und 380 mm Höhe aus mit einer Mischung von $RuO_2$ und $IrO_2$ beschichteten Titanplatten angeordnet. In das Gefäss wurde ein Stapel von je 75 nicht erfindungsgemässen Anionenaustauscher-Membranen 3 und 75 nicht erfindungsgemässen Kationenaustauscher-Membranen 4 von 100 mm Breite und 480 mm Höhe und 0,3 mm Dicke eingesetzt. Je 2 benachbarte Membranen waren durch 0,4 mm dicke Abstandhalter aus synthetischem Kautschuk getrennt, so dass eine Vielzahl von Kammern 9 und 10 mit einer lichten Weite von 0,4 mm, einer Breite von 60 mm und einer Höhe in Strömungsrichtung von 380 mm gebildet wurden. Die Rohrleitungen für den Rohwasserzulauf 5, den Diluatablauf 6, den Konzentratablauf 7, den Elektrodenspülungzulauf 13 und den Elektrodenspülungablauf 14 bestanden aus Polyvinylchlorid.

Als Anionenaustauscher-Membranen 3 wurden Membranen mit dem Handelsnamen Neosepta AM-1 der Firma Tokuyama Soda, Tokyo, Japan verwendet. Als Kationenaustauscher-Membranen 4 dienten ebenfalls Membranen auf der Basis von Styrol-Divinyl-Benzol mit der Handelsbezeichnung Neosepta CM-1 der gleichen Firma. Diese Anionen- und Kationenaustauscher-Membranen sind ähnlich wie die Membranen gemäss der US-PS 3 510 417 oder der US-PS 3 510 418 hergestellt, wobei die selektive Oberflächenbeschichtung fehlt. Zur Förderung des Flüssigkeitsstroms war eine Pumpe (ähnlich 17 in Fig. 3) vorgesehen.

Die Vorrichtung wurde mit einer Rohwassermenge (Speisewasser) von 920 l/h (255 cm$^3$/s) und einer Temperatur von 10 °C beaufschlagt. Im vorliegenden Fall durchlief das Diluat und das Konzentrat den Apparat nur einmal. Die Ausbeute an denitrifiziertem Gebrauchswasser (Diluat) bezogen auf die der Elektrodialyse-Vorrichtung zugeführten Rohwassermenge von 920 l/h (Speisewasser) betrug somit 50 %. Der Druck am Eingang der Elektrodialyse-Zellen betrug ca. 2 bar, am Ausgang ca. 0,5 bar. An die Elektroden 1 und 2 wurde eine Potentialdifferenz von 52 V angelegt. Nach je 20 min wurden die Elektroden umgepolt: 1 wurde zur Kathode, 2 wurde zur Anode. Dadurch wurde auch die Funktion der Kammern 9 und 10 vertauscht: 9 wurde zur Kammer mit abnehmender $NO_3{}^-$-Konzentration. Entsprechendes galt für die Funktionen der Abläufe 6 und 7. Die Grenzstromdichte betrug 8 mA/cm$^2$. Die effektiv eingehaltene Stromdichte betrug dabei 1,8 mA/cm$^2$, d.h. 22,5 % des Grenzstromes. Die Kathodenkammer 19 und die Anodenkammer 20 wurden mit je 150 l/h Speisewasser bespült.

Die Ionenkonzentration des Rohwassers (Speisewasser) und des Diluats (Gebrauchswasser) betrugen (mg/l):

Tabelle 3

| | Rohwasser (Speisewasser) | Diluat (Gebrauchswasser) | Konzentrat (Abwasser) |
|---|---|---|---|
| $HCO_3{}^-$ | 393 | 369 | 417 |
| $Cl^-$ | 19 | 14 | 94 |
| $NO_3{}^-$ | 45 | 41 | 49 |
| $SO_4{}^{2-}$ | 25 | 14 | 36 |
| $Ca^{2+}$ | 128 | | |
| $Mg^{2+}$ | 17 | | |
| $Na^+$ | 6,8 | | |
| $K^+$ | 4,5 | | |

Die Selektivität für den Chloridtransport gegenüber dem Sulfattransport betrug demnach 0,53, während die Selektivität für den Nitrattransport gegenüber dem Bikarbonattransport 1,48 betrug.

Ein Vergleich des Diluats mit dem Rohwasser zeigt, dass der Gehalt an Nitrationen $NO_3{}^-$ lediglich von 45 mg/l auf 41 mg/l abnahm, was für die praktische Verwendung völlig ungenügend ist.

Ausführungsbeispiel 1: Siehe Fig. 2!

Bei den nachfolgenden Beispielen wurde die gleiche Vorrichtung wie beim Beispiel A verwendet.

Als Anionenaustauscher-Membranen 3 wurden Folien eines oberflächenbehandelten Kunstharzes mit dem Handelsnamen Neosepta ACS der Firma Tokuyama Soda, Tokyo, Japan, verwendet, wie sie aus der US-PS 3,510,417 und 3,510,418 bekannt sind. Die Kationenaustauscher-Membranen 4 waren die gleichen wie im Beispiel A.

Die Vorrichtung wurde mit einer Rohwassermenge (Speisewasser) von 920 l/h (255 cm$^3$/s) und einer Temperatur von 10 °C beaufschlagt. Der Druck am Eingang der Elektrodialysezellen betrug ca. 2 bar, am Ausgang ca. 0,5 bar. An die Elektroden 1 und 2 wurde eine Potentialdifferenz von 52 V angelegt, so dass in den Kammern 9 und 10 eine mittlere Feldstärke von 0,49 V/cm herrschte. Die effektiv eingehaltene Stromdichte betrug dabei 1,8 mA/cm$^2$, bezogen auf die einseitige Oberfläche der Membranen 3 und 4 (22,5 % der Grenzstromdichte von 8 mA/cm$^2$).

Die Kathodenkammer 19 und die Anodenkammer 20 wurden mit je 150 l/h Speisewasser bespült.

Die Ionenkonzentration des Rohwassers (Speisewasser) und des Diluats (Gebrauchswassers) betrug (mg/l):

Tabelle 4

|  | Rohwasser (Speisewasser) | Diluat (Gebrauchswasser) | Konzentrat (Abwasser) |
|---|---|---|---|
| $HCO_3^-$ | 393 | 350 | 436 |
| $Cl^-$ | 19 | 11 | 27 |
| $NO_3^-$ | 45 | 24 | 66 |
| $SO_4^{2-}$ | 25 | 24 | 26 |
| $Ca^{2+}$ | 128 | 105 | 151 |
| $Mg^{2+}$ | 17 | 16 | 18 |
| $Na^+$ | 6,8 | 6,2 | 7,4 |
| $K^+$ | 4,5 | 1,7 | 7,3 |

Die Selektivität für den Chloridtransport gegenüber dem Sulfattransport betrug demnach 13,4, während die Selektivität für den Nitrattransport gegenüber dem Bikarbonattransport 5,42 betrug. Die Selektivität für den Natriumtransport gegenüber dem Kalziumtransport betrug 0,5.

Der Vergleich des Diluats mit dem Rohwasser zeigt, dass der Gehalt an Nitrationen $NO_3^-$ dank der Selektivität der Membranen auf nahezu die Hälfte gesenkt werden konnte.

Im vorliegenden Fall durchlief das Diluat und das Konzentrat den Apparat nur einmal. Die Ausbeute an denitrifiziertem Gebrauchswasser (Diluat) bezogen auf die der Elektrodialyse-Vorrichtung zugeführte Rohwassermenge von 920 l/h (Speisewasser) betrug somit 50 %.

Ausführungsbeispiel 2: Siehe Fig. 1 und 3!

Die Vorrichtung zur Durchführung des Elektrodialyseprozesses entsprach genau derjenigen von Beispiel 1. Die Betriebsweise war jedoch eine andere. Um die Wasserausbeute (Verhältnis des als Diluat anfallenden Gebrauchswassers zu aufgegebenem Rohwasser) zu erhöhen, wurde ein Teil des Konzentrats an die Aufgabestelle zurückgeführt (teilweise Konzentratrückführung 8). Im vorliegenden Fall betrug der von der Rohwasser-Förderpumpe 17 angesaugte Rohwasserzulauf 1020 l/h (285 cm³/s), wovon 100 l/h in die Rohwasserabzweigung 15 zur Verdünnung des Konzentratrücklaufs gegeben wurden. Die Flüssigkeitsmenge der Konzentratrückführung 8 betrug 820 l/h. 100 l/h des Konzentratablaufs 7 wurden als Abwasserablauf 21 verworfen. In den Kammern 9 und 10 war somit der Flüssigkeitsstrom gleich gross und betrug je 920 l/h (255 cm³/s). Die Ausbeute betrug somit

$$\frac{920}{1020} \cdot 100 = 90\ \%.$$

Die Temperatur des Diluatablaufs 6 (Gebrauchswasser) betrug 11,5 °C, diejenige des Konzentratablaufs 7: 12 °C. Die übrigen Betriebsparameter wie Potentialdifferenz, mittlere Feldstärke und Stromdichte sowie Membrantypen entsprachen denjenigen von Beispiel 1.

Die Ionenkonzentration in den verschiedenen Flüssigkeitsströmen betrug (mg/l):

Tabelle 5

|  | Rohwasser (Speisewasser) | Diluat (Gebrauchswasser) | Konzentrat (Abwasser) |
|---|---|---|---|
| $HCO_3^-$ | 393 | 355 | 733 |
| $Cl^-$ | 19 | 12 | 83 |
| $NO_3^-$ | 45 | 25 | 229 |
| $SO_4^{2-}$ | 25 | 24 | 29 |
| $Ca^{2+}$ | 128 | 110 | 294 |
| $Mg^{2+}$ | 17 | 15 | 35 |
| $Na^+$ | 6,8 | 6,4 | 10,8 |
| $K^+$ | 4,5 | 1,8 | 28,3 |

Die Selektivität für den Chloridtransport gegenüber dem Sulfattransport betrug demnach 11,3, während die Selektivität für den Nitrattransport gegenüber dem Bikarbonattransport 5,78 betrug. Die Selektivität für den Natriumtransport gegenüber dem Kalziumtransport betrug 0,4.

Nach je 20 min wurden die Elektroden umgepolt: 1 wurde zur Kathode, 2 zur Anode. Dadurch wurde auch die Funktion der Kammern 9 und 10 vertauscht: 9 wurde zur Kammer mit abnehmender $NO_3^-$-Konzentration, 10 zur Kammer mit zunehmender $NO_3^-$-Konzentration. Entsprechendes galt für die Funktionen der Abläufe 6 und 7.

Ausführungsbeispiel 3:

Die Vorrichtung zur Durchführung des Elektrodialyseprozesses entsprach derjenigen von Beispiel 1. Die Betriebsweise war jedoch eine andere. Bedingt durch die höhere $NO_3^-$-Konzentration im Rohwasserzulauf wurde an den Elektroden 1 und 2 eine höhere Potentialdifferenz von 58 V angelegt. Die entsprechende effektiv eingestellte Stromdichte betrug 2,2 mA/cm$^2$, entsprechend 22 % der Grenzstromdichte, die mittlere Feldstärke 0,55 V/cm. Die Grenzstromdichte war zu 10 mA/cm$^2$ bestimmt worden.

Die Ionenkonzentration in den verschiedenen Flüssigkeitsströmen betrug (mg/l):

Tabelle 6

|  | Rohwasser (Speisewasser) | Diluat (Gebrauchswasser) | Konzentrat (Abwasser) |
|---|---|---|---|
| $HCO_3^-$ | 392 | 343 | 834 |
| $Cl^-$ | 18 | 11 | 76 |
| $NO_3^-$ | 50 | 25 | 293 |
| $SO_4^{2-}$ | 25 | 22 | 57 |
| $Ca^{2+}$ | 130 | 107 | 358 |
| $Mg^{2+}$ | 17 | 14 | 42 |
| $Na^+$ | 6,5 | 6 | 12,4 |
| $K^+$ | 3,8 | 1,8 | 23,6 |

Die Selektivität für den Chloridtransport gegenüber dem Sulfattransport betrug demnach 3,85, während die Selektivität für den Nitrattransport gegenüber dem Bikarbonat-Transport 5,19 betrug. Die Selektivität für den Natriumtransport gegenüber dem Kalziumtransport betrug 0,41.

Ausführungsbeispiel 4:

Die Vorrichtung zur Durchführung des Elektrodialyseprozesses entsprach derjenigen von Beispiel 1. Da der Rohwasserstrom eine erhöhte Konzentration an einwertigen Kationen enthielt, wurden hier für die Kationenaustauscher-Membranen 4 oberflächenbehandelte Kunstharzfolien auf der Basis von Styrol-Divinyl-Benzol mit dem Handelsnamen Neosepta CMS der Firma Tokuyama Soda, Tokyo, Japan, verwendet. Diese Membranen sind gemäss der US-PS 3 510 417 oder 3 510 418 hergestellt. Dadurch konnte unter Berücksichtigung der Konzentratrückführung eine Ausbeute an denitrifiziertem Gebrauchswasser (Diluat) bezogen auf die der Elektrodialyse-Vorrichtung zugeführten Rohwassermenge von 95 % erreicht werden. Die Stromdichte betrug 20 % der Grenzstromdichte.

Die Ionenkonzentration in den verschiedenen Flüssigkeitsströmen betrug (mg/l):

Tabelle 7

|  | Rohwasser (Speisewasser) | Diluat (Gebrauchswasser) | Konzentrat (Abwasser) |
|---|---|---|---|
| $HCO_3^-$ | 398 | 360 | 1250 |
| $Cl^-$ | 19 | 12 | 162 |
| $NO_3^-$ | 45 | 25 | 453 |
| $SO_4^{2-}$ | 25 | 24 | 35 |
| $Ca^{2+}$ | 128 | 125 | 190 |
| $Mg^{2+}$ | 0 | 0 | 0 |
| $Na^+$ | 38 | 20 | 406 |
| $K^+$ | 10 | 1,5 | 184 |

Die Selektivität für den Chloridtransport gegenüber dem Sulfattransport betrug demnach 11,3, während die Selektivität für den Nitrattransport gegenüber dem Bikarbonattransport 5,86 betrug. Die Selektivität für den Natriumtransport gegenüber dem Kalziumtransport betrug 27,1.

Ausführungsbeispiel 5:

Die Vorrichtung zur Durchführung des Elektrodialyseprozesses entsprach mit einer Ausnahme derjenigen von Beispiel 1. In den Elektrodenspülungzulauf 13 wurde eine Enthärtungseinrichtung 22 geschaltet, welche die im Wasser vorhandenen Ca- und Mg-Ionen gegen Na-Ionen austauschte. Die Betriebsweise entsprach derjenigen von Beispiel 1. Durch die Zuführung von enthärtetem Wasser für die Elektrodenspülung (Zulauf 13) wurde erreicht, dass in den Kammern 19 und 20 und in den entsprechenden Rohrleitungen keine Kesselsteinbildung über eine Versuchsperiode von einem Monat auftrat.

Die Erfindung ist nicht auf die Ausführungsbeispiele beschränkt.

Ähnliche Ergebnisse wurden mit den Anionenaustauscher-Membranen Nr. 2, 3 und 6 gemäss Tabelle 1 erreicht, welche eine Selektivität $\alpha$ für den Transport von Chloridionen gegenüber Sulfationen von > 1 aufweisen, sowie mit der Kationenaustauscher-Membran Nr. 6 gemäss Tabelle 2, welche eine Selektivität $\alpha$ für den Transport von Natriumionen gegenüber Kalziumionen von > 1 aufweist.

Bei dem Verfahren zur Entfernung von Nitraten aus einem Wasserstrom im Rahmen der Gebrauchswasseraufbereitung auf der Basis eines Elektrodialyseprozesses, bei dem einerseits ein an Nitrationen angereichertes Konzentrat 7, welches aus dem Wasserstrom abgezweigt wird, und andererseits ein verbleibendes, als Gebrauchswasser zu verwendendes Diluat 6 erzeugt wird, werden die im zufliessenden Wasser 5 vorliegenden Nitrationen $NO_3^-$ zu einer bevorzugten Wanderung in Richtung Konzentrat 7 gezwungen. Dabei wird für die auf die einseitige Membranfläche der Ionenaustauscher bezogene Stromdichte der Wert von 50 % einer Grenzstromdichte nicht überschritten.

Trägt man den Leitungswiderstand einer Elektrodialysevorrichtung auf der Ordinate und den Reziprokwert des Ionenstroms auf der Abszisse eines Koordinatenkreuzes auf, so zeigt der Verlauf des Leitungswiderstandes mit abnehmender Stromstärke, ggf. nach einem vorausgehenden 1. Minimum und einem darauffolgenden 1. Maximum ein 2. Minimum, das tiefer als das 1. Minimum ist, gefolgt von einem nahezu linearen Anstieg. Extrapoliert man den nahezu linearen Anstieg in Richtung grösserer Stromwerte und den vorangehenden Abfall der Kennlinie des Leitungswiderstandes in Richtung kleinerer Stromwerte, so erhält man als Schnittpunkt dieser beiden Extrapolationskurven einen sog. Grenzstromwert. Dividiert man diesen Grenzstromwert durch die aktive einseitige Fläche der Membranen (senkrecht zur Stromrichtung), so erhält man daraus die Grenzstromdichte. Diesbezüglich wird auch auf das eingangs genannte Dokument von D. A. Cowan und J. H. Brown verwiesen. Die Grenzstromdichte nimmt mit der Strömungsgeschwindigkeit des Elektrolyten zu; sie beträgt für übliche Trinkwässer: 70 $A/m^2$ - 90 $A/m^2$.

Die bevorzugte Wanderung der Nitrationen $NO_3^-$ wird erreicht durch die Zuhilfenahme von Anionenaustauscher-Membranen 3 in Form von homogenen und/oder heterogenen Filmen oder Folien aliphatischer, aromatischer oder gemischt aliphatisch-aromatischer organischer Polymere mit kovalent gebundenen Substituenten, bestehend aus Kronen-Aethern und/oder Guanidinium- und/oder quaternären Ammonium- und/oder quaternären Phosphonium- und/oder tertiären Sulfonium- und/oder tertiären Oxoniumgruppen, welche bei Temperaturen zwischen 0 °C und 60 °C und im Gleichgewicht mit verdünnten wässrigen Lösungen mit pH-Werten zwischen 4 und 9 zur Hauptsache in positiv geladener Form vorliegen. Die Membranen 3 bestehen jeweils aus einem Kondensations- oder Additionspolymer oder Copolymer oder

9

Terpolymer oder Interpolymer oder aus einem gepfropften Copolymer oder einem gepfropften Terpolymer oder aus Mischungen oder Lösungen solcher Polymere, Copolymere oder Terpolymere. Diese Membranen 3 sind im wesentlichen in wässrigen, salzhaltigen Lösungen unlöslich. In einer verdünnten wässrigen Lösung weisen sie eine Selektivität $\alpha$ für den Transport von Chloridionen $Cl^-$ gegenüber dem Transport von Sulfationen $SO_4{}^{2-}$ von > 1 auf, wobei die Selektivität $\alpha$ wie folgt definiert ist:

$$\alpha_{SO_4{}^{2-}}^{Cl^-} \;=\; \frac{dN_{Cl^-}}{dt \cdot N_{Cl^-}} \;\cdot\; \frac{dt \cdot N_{SO_4{}^{2-}}}{dN_{SO_4{}^{2-}}} \;,$$

mit
N = Konzentration der jeweiligen Ionenart in der wässrigen Lösung, dN/dt = Geschwindigkeit, mit welcher das jeweilige Ion bei einer vorgegebenen konstanten Stromdichte aus der wässrigen Lösung entfernt wird. In vorteilhafter Weise ist mindestens eine Oberfläche der Anionenaustauscher-Membran während und/oder nach ihrer Herstellung derart behandelt, dass ihre Selektivität $\alpha$ für den Transport von Chloridionen $Cl^-$ gegenüber dem Transport von Sulfationen $SO_4{}^{2-}$ > 1 oder vorzugsweise > 2 ist. Vorzugsweise besteht die Anionenaustauscher-Membran 3 aus einem derivatisierten Styrol- und/oder Vinylpyridin-Copolymerisat.

Das Verfahren wird dadurch verfeinert, dass die im zufliessenden Wasser 5 vorliegenden einwertigen Kationen zu einer bevorzugten Wanderung in Richtung des Konzentrates gezwungen werden unter Zuhilfenahme von Kationentauscher-Membranen 4 in Form von homogenen und/oder heterogenen Filmen oder Folien aliphatischer, aromatischer oder gemischt aliphatisch-aromatischer organischer Polymere mit kovalent gebundenen Substituenten bestehend aus Salzen von Sulfonsäuren und/oder Phosphonsäuren und/oder Perfluoro-Carbonsäuren, welche bei Temperaturen zwischen 0 °C und 60 °C und im Gleichgewicht mit verdünnten wässrigen Lösungen mit pH-Werten zwischen 5 und 9 zur Hauptsache in negativ geladener Form vorliegen, wobei besagte Membranen 4 jeweils aus einem Kondensations- oder Additionspolymer oder Copolymer oder Terpolymer oder Interpolymer, oder aus einem gepfropften Copolymer oder aus einem gepfropften Terpolymer oder aus Mischungen oder Lösungen solcher Polymere, Copolymere oder Terpolymere bestehen, wobei besagte Membranen 4 im wesentlichen in wässrigen, salzhaltigen Lösungen unlöslich sind. Die Membranen 4 weisen in einer verdünnten wässrigen Lösung eine Selektivität $\alpha$ für den Transport von Natriumionen Na + gegenüber dem Transport von Kalziumionen $Ca^{2+}$ von > 1 auf, wobei die Selektivität $\alpha$ wie folgt definiert ist:

$$\alpha_{Ca^{2+}}^{Na^+} \;=\; \frac{dN_{Na^+}}{dt \cdot N_{Na^{2+}}} \;\cdot\; \frac{dt \cdot N_{Ca^{2+}}}{dN_{Ca^{2+}}} \;,$$

mit
N = Konzentration der jeweiligen Ionenart in der wässrigen Lösung, dN/dt = Geschwindigkeit, mit welcher das jeweilige Ion bei einer vorgegebenen konstanten Stromdichte aus der wässrigen Lösung entfernt wird, wobei in vorteilhafter Weise mindestens eine Oberfläche der Kationenaustauscher-Membran 4 während und/oder nach ihrer Herstellung derart behandelt ist, dass ihre Selektivität $\alpha$ für den Transport von Natriumionen $Na^+$ gegenüber dem Transport von Kalziumionen $Ca^{2+}$ > 1 ist. Vorzugsweise besteht die Kationenaustauscher-Membran 4 aus einem derivatisierten Styrol-Copolymerisat.

Es ist von Vorteil, die Stromdichte auf einem Wert von weniger als 50 %, vorzugsweise von 15 % bis 25 % der Cowan-Brown-Grenzstromdichte und die Geschwindigkeit des Wasserstroms zwischen den Membranflächen und parallel zu diesen im Mittel auf einem Wert von 1 cm/s bis 100 cm/s zu halten. Der Elektrodialyseprozess wird vorteilhafterweise derart durchgeführt, dass die Elektroden 1 und 2 in Intervallen von 10 min bis 24 h umgepolt werden.

Im allgemeinen wird in der Praxis ein Teil des Konzentrates zurückgeführt und einem Rohwasser-Teilstrom beigemischt. Dadurch wird die Ausbeute an denitrifiziertem Gebrauchswasser gesteigert. Ferner wird in vorteilhafter Weise der die Elektroden 1 und 2 bespülende Rohwasser-Teilstrom zuvor enthärtet. Der Volumenstrom im Abwasserablauf 21 soll vorzugsweise nicht mehr als 15 % des Volumenstromes im Rohwasserzulauf 5 betragen.

EP 0 394 858 B1

Die Vorrichtung zur Entfernung von Nitraten aus einem Wasserstrom im Rahmen der Gebrauchswasseraufbereitung auf der Basis eines Elektrodialyseprozesses weist mindestens einen mehrere Kammern 9 und 10 enthaltenden, mit Elektroden 1 und 2 versehenen und durch Kunststoffmembranen 3 und 4 unterteilten Block zur kontinuierlichen Beschickung mit Rohwasser 5 auf. Als Kunststoffmembranen werden Anionenaustauscher-Membranen 3 verwendet, bei denen mindestens eine Oberfläche derart behandelt ist, dass die Membran 3 in einer verdünnten wässrigen Lösung eine Selektivität $\alpha$ für den Transport von Chloridionen $Cl^-$ gegenüber dem Transport von Sulfationen $SO_4{}^{2-}$ von > 1, vorzugsweise von > 2 aufweist, dahingehend, dass die Nitrationen $NO_3{}^-$ zu einer bevorzugten Wanderung gezwungen werden, während die übrigen Anionen weitgehend in ihrer ursprünglichen Konzentration belassen werden. Bei den Kationenaustauscher-Membranen 4 ist mindestens eine Oberfläche derart behandelt, dass die Membran 4 in einer verdünnten wässrigen Lösung eine Selektivität $\alpha$ für den Transport von Natriumionen $Na^+$ gegenüber dem Transport von Kalziumionen $Ca^{2+}$ von > 1 aufweist. Die Tendenz zur Kesselsteinbildung in den Kammern 9 mit zunehmender $NO_3$-Konzentration und in den vom Konzentratablauf 7 bespülten Bauteilen wird verringert.

In der Praxis ist im Rohwasserzulauf 5 eine Rohwasser-Förderpumpe 17 vorhanden. Ferner sind Mittel zur wenigstens teilweisen Konzentratrückführung 8 sowie eine Konzentrat-Umlaufpumpe 18 vorgesehen. Die Elektroden 1 und 2 bestehen vorzugsweise aus mit $RuO_2$ und/oder $IrO_2$ beschichtetem Titan oder aus einer Titanlegierung.

**Patentansprüche**

1. Verfahren zur Entfernung von Nitraten aus einem Wasserstrom im Rahmen der Gebrauchswasseraufbereitung auf der Basis eines Elektrodialyseprozesses,
   a) wobei einerseits ein an Nitrationen angereichertes Konzentrat (7), welches aus dem Wasserstrom abgezweigt wird, und
   b) andererseits ein verbleibendes, als Gebrauchswasser zu verwendendes Diluat (6) erzeugt wird,
   c) wobei die im zufliessenden Wasser (5) vorliegenden Nitrationen $NO_3{}^-$ zu einer bevorzugten Wanderung in Richtung des Konzentrates (7) gezwungen werden,
   dadurch gekennzeichnet,
   d) dass die bevorzugte Wanderung der Nitrationen $NO_3{}^-$ bewerkstelligt wird unter Zuhilfenahme von mindestens einer selektiven Anionenaustauscher-Membran (3), die in dem Wasserstrom eine Selektivität $\alpha$ für den Transport von Chloridionen $Cl^-$ gegenüber dem Transport von Sulfationen $SO_4{}^{2-}$ von > 1 aufweist.

2. Verfahren nach Anspruch 1, dadurch gekennzeichnet,
   a) dass die auf die einseitige Membranfläche der Ionenaustauscher bezogene Stromdichte den Wert von 50 % der Grenzstromdichte nicht überschreitet,
   b) insbesondere, dass die Stromdichte ≦ 25 % der Grenzstromdichte ist.

3. Verfahren nach Anspruch 1 oder 2, dadurch gekennzeichnet, dass die im zufliessenden Wasser (5) vorliegenden einwertigen Kationen zu einer bevorzugten Wanderung in Richtung des Konzentrates gezwungen werden unter Zuhilfenahme von Kationentauscher-Membranen (4), die in dem Wasserstrom eine Selektivität $\alpha$ für den Transport von Natriumionen $Na^+$ gegenüber dem Transport von Kalziumionen $Ca^{2+}$ von > 1 aufweisen.

4. Verfahren nach einem der vorangegangenen Ansprüche, dadurch gekennzeichnet, dass der Volumenstrom im Abwasserablauf (21) nicht mehr als 15 % des Volumenstromes im Rohwasserzulauf (5) beträgt.

5. Verfahren nach einem der vorangegangenen Ansprüche, dadurch gekennzeichnet,
   a) dass der die Elektroden (1, 2) bespülende Rohwasserteilstrom,
   b) insbesondere der die Kathode (2) bespülende Rohwasserteilstrom zuvor enthärtet
   c) und/oder zumindest teilweise entsalzt wird.

6. Vorrichtung zur Entfernung von Nitraten aus einem Wasserstrom im Rahmen der Gebrauchswasseraufbereitung, auf der Basis eines Elektrodialyse-Prozesses,
   a) mit mindestens einer Elektrodialyseanordnung, die mindestens eine 1. und 2. Elektrodialysekammer (9, 10), welche von mindestens einer Anionen- und mindestens einer Kationenaustauscher-Membran (3, 4) begrenzt sind, zwischen mindestens 2 Elektroden (1, 2) aufweist, dadurch gekennzeichnet,

b) dass die mindestens eine Anionenaustauscher-Membran (3) in dem Wasserstrom eine Selektivität $\alpha$ für den Transport von Chloridionen Cl⁻ gegenüber dem Transport von Sulfationen $SO_4^{2-}$ von > 1 aufweist.

7. Vorrichtung nach Anspruch 6, dadurch gekennzeichnet,

a) dass die mindestens eine Anionenaustauscher-Membran (3) Filme oder Folien aliphatischer oder aromatischer oder gemischt aliphatisch-aromatischer organischer Polymere aufweist,

b) mit Substituenten aus Kronen-Äthern und/oder Guanidinium- und/oder quaternären Ammonium- und/oder quaternären Phosphonium- und/oder tertiären Sulfonium- und/oder tertiären Oxoniumgruppen,

c) welche bei Temperaturen zwischen 0 °C und 60 °C und im Gleichgewicht mit wässrigen Lösungen mit pH-Werten zwischen 4 und 9 zu über 50 % in positiv geladener Form vorliegen, und

d) dass die mindestens eine Anionenaustauscher-Membran (3) ein Kondensations- oder Additionspolymer oder ein Copolymer oder Terpolymer oder Interpolymer oder ein gepfropftes Copolymer oder ein gepfropftes Terpolymer oder Mischungen oder Lösungen solcher Polymere oder Copolymere oder Terpolymere aufweist.

8. Vorrichtung nach einem der Ansprüche 6 oder 7, dadurch gekennzeichnet, dass wenigstens eine Oberfläche der mindestens einen Kationenaustauscher-Membran (4) in dem Wasserstrom eine Selektivität $\alpha$ für den Transport von Natriumionen Na⁺ gegenüber dem Transport von Kalziumionen $Ca^{2+}$ von > 1 aufweist.

9. Vorrichtung nach Anspruch 8, dadurch gekennzeichnet, dass

a) die mindestens eine Kationenaustauscher-Membran (4) Filme oder Folien aliphatischer oder aromatischer oder gemischt aliphatisch-aromatischer organischer Polymere aufweist,

b) mit Substituenten aus Sulfonsäuren oder Phosphonsäuren und/oder Perfluoro-Carbonsäuren,

c) welche bei Temperaturen zwischen 0 °C und 60 °C und im Gleichgewicht mit wässrigen Lösungen mit pH-Werten zwischen 4 und 9 zu über 50 % in negativ geladener Form vorliegen, und

d) dass die mindestens eine Kationenaustauscher-Membran (4) mindestens ein Copolymer oder Terpolymer oder Interpolymer oder ein gepfropftes Polymer oder ein gepfropftes Terpolymer oder Mischungen oder Lösungen solcher Polymere, Copolymere oder Terpolymere enthält.

10. Vorrichtung nach einem der Ansprüche 6 bis 9, dadurch gekennzeichnet, dass die Elektroden (1, 2) aus mit $RuO_2$ und/oder $IrO_2$ beschichtetem Titan oder einer Titanlegierung bestehen.

**Claims**

1. Process for removing nitrates from a water stream during the treatment of process water, based on an electrodialysis process,

a) which produces, on the one hand, a concentrate (7) which contains high concentrations of nitrate ions and is branched off from the water stream, and

b) on the other hand, leaves a diluate (6) to be used as process water,

c) the nitrate ions $NO_3^-$ present in the feed water (5) being forced into preferential migration towards the concentrate (7),

characterized in that

d) the preferential migration of the nitrate ions $NO_3^-$ being effected with the aid of at least one selective anion exchange membrane (3), which, in the water stream, has a selectivity $\alpha$ for the transport of chloride ions Cl⁻ over the transport of sulphate ions $SO_4^{2-}$ of > 1.

2. Process according to Claim 1, characterized in that

a) the current density, based on the one-sided membrane surface of the ion exchanger, does not exceed the value of 50% of the limiting current density, and

b) in particular the current density is $\leq$ 25% of the limiting current density.

3. Process according to Claim 1 or 2, characterized in that the monovalent cations present in the feed water (5) are forced into preferential migration towards the concentrate with the aid of cation exchange

EP 0 394 858 B1

membranes (4), which, in the water stream, have a selectivity $\alpha$ for the transport of sodium ions $Na^+$ over the transport of calcium ions $Ca^{2+}$ of > 1.

4. Process according to any one of the preceding claims, characterized in that the volume flow rate in the effluent discharge (21) is not more than 15% of the volume flow rate in the untreated water feed (5).

5. Process according to any one of the preceding claims, characterized in that
   a) the untreated water sub-stream running over the electrodes (1, 2),
   b) in particular the untreated water sub-stream running over the cathode (2) is previously softened,
   c) and/or at least partially deionized.

6. Apparatus for removing nitrates from a water stream during the treatment of process water, based on an electrodialysis process,
   a) having at least one electrodialysis arrangement which has at least one 1st and 2nd electrodialysis chamber (9, 10), which are limited by at least one anion exchange membrane and at least one cation exchange membrane (3, 4), between at least 2 electrodes (1, 2),
   characterized in that
   b) the at least one anion exchange membrane (3) has, in the water stream, a selectivity $\alpha$ for the transport of chloride ions $Cl^-$ over the transport of sulphate ions $SO_4^{2-}$ of > 1.

7. Apparatus according to Claim 6, characterized in that
   a) the at least one anion exchange membrane (3) has films or foils of aliphatic or aromatic or mixed aliphatic-aromatic organic polymers,
   b) having substituents of crown ethers and/or guanidinium and/or quaternary ammonium and/or quaternary phosphonium and/or tertiary sulphonium and/or tertiary oxonium groups,
   c) which, at temperatures between 0°C and 60°C and in equilibrium with aqueous solutions at pH values between 4 and 9, are, to the extent of over 50%, in positively charged form, and
   d) the at least one anion exchange membrane (3) has a condensation polymer or addition polymer, or a copolymer or terpolymer or interpolymer, or a graft copolymer or a graft terpolymer, or mixtures or solutions of such polymers or copolymers or terpolymers.

8. Apparatus according to either of Claims 6 and 7, characterized in that at least one surface of the at least one cation exchange membrane (4) has, in the water stream, a selectivity $\alpha$ for the transport of sodium ions $Na^+$ over the transport of calcium ions $Ca^{2+}$ of > 1.

9. Apparatus according to Claim 8, characterized in that
   a) the at least one cation exchange membrane (4) has films or foils of aliphatic or aromatic or mixed aliphatic-aromatic organic polymers,
   b) having substituents of sulphonic acids or phosphonic acids and/or perfluorocarboxylic acids,
   c) which, at temperatures between 0°C and 60°C and in equilibrium with aqueous solutions at pH values between 4 and 9, are, to the extent of over 50%, in negatively charged form, and
   d) the at least one cation exchange membrane (4) contains at least one copolymer or terpolymer or interpolymer, or a graft polymer or a graft terpolymer, or mixtures or solutions of such polymers, copolymers or terpolymers.

10. Apparatus according to any of Claims 6 to 9, characterized in that the electrodes (1; 2) comprise $RuO_2$- and/or $IrO_2$-coated titanium or a titanium alloy.

**Revendications**

1. Procédé d'élimination de nitrates d'un courant aqueux dans le cadre de l'utilisation d'un traitement aqueux sur base d'une procédure d'électrodialyse,
   a) où, d'une part, un concentré (7), enrichi en ions nitrate, lequel provient du courant aqueux, et
   b) d'autre part, un diluat résiduaire (6), à utiliser comme eau de travail, est produit,
   c) où les ions nitrate $NO_3^-$ présents dans l'eau d'entrée (5) sont contraints à un passage préféré dans la direction du concentré (7),
   caractérisé en ce que :

13

EP 0 394 858 B1

d) le passage préféré des ions nitrate $NO_3^-$ est réalisé à l'aide d'au moins une membrane échangeuse d'anions, sélective (3), qui présente, dans le courant aqueux, une sélectivité $\alpha$ pour le transport des ions chlorure $Cl^-$ par rapport aux ions sulfate $SO_4^{2-} > 1$.

**2.** Procédé suivant la revendication 1, caractérisé en ce que :
a) la densité de courant rapportée à la surface de la membrane du côté de l'échangeur d'ions, ne dépasse pas une valeur de 50% de la densité de courant limite,
b) en particulier, que la densité de courant est ≤ 25% de la densité de courant limite.

**3.** Procédé suivant la revendication 1 ou 2, caractérisé en ce que les cations monovalents présents dans l'eau d'entrée (5) sont contraints à un passage préféré dans la direction du concentré, à l'aide de la membrane échangeuse d'ions (4), qui présente, dans le courant aqueux, une sélectivité $\alpha$ pour le transport des ions sodium $Na^+$ par rapport aux ions calcium $Ca^{2+} > 1$.

**4.** Procédé suivant l'une quelconque des revendications précédentes, caractérisé en ce que le volume du courant d'écoulement d'eau résiduaire (21) ne s'élève pas à plus de 15% du volume du courant d'admission de l'eau brute (5).

**5.** Procédé suivant l'une quelconque des revendications précédentes, caractérisé en ce que :
a) le courant de la partie eau résiduaire mouillant les électrodes (1, 2),
b) en particulier, le courant de la partie eau résiduaire mouillant la cathode (2) est d'abord adoucie
c) et/ou, au moins une partie, est dessalée.

**6.** Dispositif d'élimination de nitrates d'un courant aqueux dans le cadre de l'utilisation d'un traitement aqueux sur base d'une procédure d'électrodialyse,
a) avec au moins un dispositif d'électrodialyse, qui présente au moins une chambre d'électrodialyse 1. et 2. (9, 10), qui est délimitée par au moins une membrane échangeuse d'anions et au moins une membrane échangeuse de cations (3, 4), entre au moins deux électrodes (1, 2),
caractérisé en ce que :
b) la membrane échangeuse d'anions (3), au moins une existe, manifeste, dans le courant aqueux, une sélectivité $\alpha$ pour le transport des ions chlorure $Cl^-$ par rapport aux ions sulfate $SO_4^{2-} > 1$.

**7.** Dispositif suivant la revendication 6, caractérisé en ce que :
a) la membrane échangeuse d'anions (3), au moins une existe, se compose d'une pellicule ou d'une feuille d'un polymère organique aliphatique ou aromatique ou aliphatique-aromatique en mélange,
b) substitué par un éther-couronne et/ou des radicaux guanidinium et/ou ammonium quaternaire et/ou phosphonium quaternaire et/ou sulfonium tertiaire et/ou oxonium tertiaire,
c) qui existe sous une forme chargée positivement à plus de 50%, à une température entre 0°C et 60°C et en équilibre avec une solution aqueuse de pH entre 4 et 9, et que :
d) la membrane échangeuse d'anions (3), au moins une existe, se compose d'un polymère ou copolymère ou terpolymère ou interpolymère de condensation ou d'addition, ou d'un copolymère greffé ou d'un terpolymère greffé ou d'un mélange ou d'une solution de tels polymères ou copolymères ou terpolymères.

**8.** Dispositif suivant la revendication 6 ou 7, caractérisé en ce qu'au moins une surface de la membrane échangeuse de cations (4), au moins une existe, manifeste, dans le courant aqueux, une sélectivité $\alpha$ pour le transport des ions sodium $Na^+$ par rapport aux ions calcium $Ca^{2+} > 1$.

**9.** Dispositif suivant la revendication 8, caractérisé en ce que :
a) la membrane échangeuse de cations (4), au moins une existe, se compose d'une pellicule ou d'une feuille d'un polymère aliphatique ou aromatique ou aliphatique-aromatique en mélange,
b) substitué par des acides sulfoniques, des acides phosphoniques et/ou des acides perfluoro-carboxyliques,
c) qui existe sous une forme chargée négativement à plus de 50%, à une température entre 0°C et 60°C et en équilibre avec une solution aqueuse de pH entre 4 et 9, et que :
d) la membrane échangeuse de cations (4), au moins une existe, se compose au moins d'un copolymère ou terpolymère ou interpolymère ou d'un polymère greffé ou d'un terpolymère greffé ou d'un mélange ou d'une solution de tels polymères ou copolymères ou terpolymères.

14

**10.** Dispositif suivant l'une quelconque des revendications 6 à 9, caractérisé en ce que les électrodes (1, 2) consistent en du titane recouvert de $RuO_2$ et/ou de $IrO_2$ ou d'un alliage de titane.

FIG.1

FIG.2

# FIG.3